# EUROPEAN PATENT APPLICATION

(11) **EP 3 933 720 A1**
(43) Date of publication of application: **05.01.2022**
(21) Application number: 20762574.0
(22) Date of filing: 14.02.2020
(51) Int. Cl.: G06Q 10/00, G06Q 40/02

(54) **BUSINESS ASSISTANCE DEVICE AND BUSINESS CUSTOMER LIST GENERATION DEVICE**

(30) Priority: 28.02.2019 JP 2019035644
(71) Applicant: Generic Solution Corporation, Tokyo 150-0036 (JP)
(72) Inventor: KONISHI Ryosuke, Tokyo 150-0036 (JP)
(74) Representative: Hübner, Gerd
(86) International application number: PCT/JP2020/005734
(87) International publication number: WO 2020/175177

(57) **Abstract**

The present invention pertains to assisting efficient sales activities at a financial institution by accurately extracting customers who are likely to need prescribed financial products. A sales assistance department according to the present invention has: an acquisition part for acquiring transaction data of customers at a financial institution; a relevance determination part for determining whether first transaction data of the customers at the past time of purchasing financial products relates to second transaction data of the customers at the current time; an extraction part for extracting a customer for whom it is determined that the first transaction data relates to the second transaction data; and an output part for performing output regarding the extracted customer.

## Description

### Technical Field

The present invention relates to a sales support apparatus and a sales destination list creation apparatus.

### Background Art

In recent years, financial institutions have begun to pay attention to EBM (event-based marketing), which proposes financial products required by customers at the right time. EBM is a marketing method that detects changes in customer (target) attribute information and transaction behavior from the customer database, predicts this as an opportunity (event) for the occurrence of financial needs, and proposes financial products that the customer wants.

Conventionally, as a method similar to EBM, such a method of finding potential customers has been adopted, in which extraction conditions such as a predetermined threshold value arbitrarily set for statistics such as relatively static and hard-to-change customer attribute information, balance of assets under deposit, and past financial purchase history. For example, a customer whose deposit amount is 10 million yen or more is extracted with the deposit amount as a quantitative threshold, and a sales approach such as an investment trust product is performed to the extracted potential customers. However, even if the deposit amount is less than 10 million yen, there are customers who have high needs, so customers who still have potential needs will be missed. In addition, since the customer group does not change much, it is not possible to properly grasp changes in the situation of customer needs on a daily basis, and as a result, it is difficult to accurately extract potential customers.

As a technology related to EBM of a financial institution, for example, in Patent Document 1, a company whose current company-specific information registered this time and the previous company-specific information registered before the above-mentioned company-specific information are different is targeted as a target company. The method of supporting the development of a trading company that supports sales activities by extracting and distributing the information about the target company to the person in charge is described.

For example, Patent Document 2 discloses a system that includes a part configured to classify a main account that has received a predetermined continuous transfer or has made a predetermined continuous transfer based on the past transfer history, a sub-account without a predetermined continuous transfer, a part configured to determine, based on the attribute data of the main account, that a large deposit transferred to the main account is the deposit with a predetermined purpose, a part configured to determine that a large amount deposited into the secondary account is a potential deposit that may be a deposit with a predetermined purpose, and a part configured to determine, based on the attribute data of the secondary account, that the potential deposit deposited in the secondary account is a deposit for the same purpose as the large deposit transferred to the main account when the transfer source and the transfer date match the transfer source and the transfer date of the large deposit transferred to the main account.

Further, for example, in Patent Document 3, the corporate extraction part of the corporate sales support system extracts a corporation to be operated from among the corporations related to each settlement indicated by the corporate settlement information indicating the settlement made between the corporations. The corporation extraction part extracts, based on a combination of a corporation on the deposit side and a corporation on the receiving side of each settlement made within the target period, and a corporation on the deposit side of each settlement made within the past period prior to the target period, and a combination of the receiving corporations, at least one of the corporation that received payment from the new sales destination partner within the target period and the corporation that received the payment from the new sales destination partner within the target period. A corporate sales support system is disclosed in which the sales support information output part that outputs sales support information for supporting sales to the extracted corporation when the corporation is extracted by the corporation extraction part.

### [Prior art literature]

### [Patent Documents]

Patent Document 1: Japanese Patent No.6208907
Patent Document 2: Japanese Patent No.5850592
Patent Document 3: Japanese Patent No.5416852

### Disclosure of Invention

### Problem to be Solved by Invention

The invention described in Patent Document 1-3 focuses on changes in customer information held by a financial institution (for example, company-specific information, balances of main account and sub-account, and corporate settlement information, respectively), and a certain rule is set as an extraction condition based on assumed needs, and when a change in customer information that applies to the rule is detected from the customer database, the customer is extracted as a target customer.

However, the extraction condition of the target customer is a generalized rule that is determined in advance by the system administrator based on the assumed needs. Therefore, it goes without saying that it is not possible to extract target customers who are expected to have high needs even though they do not meet the rules. That is, the lifestyles of customers have become more diverse in recent years, and it is difficult to find potential customers in detail simply by using generalized rules for changes in customer features.

The present invention has been proposed in view of the above points, and in one aspect, the purpose of this invention is to accurately extract customers who are expected to need a predetermined financial product and support efficient sales activities at financial institutions.

### Means to Solve the Problem

In order to solve the above problems, the sales support apparatus according to the present invention is a sales support apparatus in a financial institution and is an acquisition part for acquiring transaction data of a customer in the financial institution and a time when a financial product is purchased in the past. The relevance determination part for determining the relationship between the customer's first transaction data and the customer's second transaction data at the present time, and the relevance determination part determine that the first transaction data and the second transaction data are related. It has an extraction part for extracting the customer and an output part for outputting the customer extracted by the extraction part.

Further, in order to solve the above problems, the sales support apparatus according to the present invention is a sales support apparatus in a financial institution, and acquires at least two or more different types of transaction data, which are transaction data of customers in the financial institution. The relevance determination part for determining the relationship between the acquisition part to be performed, the pattern of the customer's first transaction data at the time of purchasing the financial product in the past, and the pattern of the customer's second transaction data at the present time, and the relevance determination. It has an extraction part for extracting the customer determined to be related to the pattern of the first transaction data and the pattern of the second transaction data by the part, and an output part for outputting the customer extracted by the extraction part.

### Advantage of the Invention

According to the embodiment of the present invention, in one aspect, it is possible to accurately extract customers who are expected to have needs for a predetermined financial product and support efficient sales activities in a financial institution.

### Brief Description of Drawings

FIG. 1 is a figure showing a configuration example of a sales support system according to the present embodiment.
FIG. 2 is a figure showing a hardware configuration example of a management server according to the present embodiment.
FIG. 3 is a figure showing a software configuration example of a management server according to the present embodiment.
FIG. 4A: An example of customer information held by the financial institution system 10 (for example, a core system for managing various deposits such as ordinary deposits and time deposits) is shown.
FIG. 4B: An example of balance information held by financial institution system 10 (for example, a core system for managing various deposits such as ordinary deposits and time deposits) is shown.
FIG. 4C: An example of transaction detail information held by the financial institution system 10 (for example, a core system for managing various deposits such as ordinary deposits and time deposits) is shown.
Fig. 4D: An example of investment trust information of financial institution system 10 (sales management system that manages sales results of financial products such as investment trusts) is shown.
Fig. 4E: An example of asset management policy information held by financial institution system 10 (front compliance system for managing and proposing financial products according to the asset management needs of each customer) is shown.
Fig. 4F: An example of negotiation history information of the financial institution system 10 (history system for managing the negotiation history) is shown.
FIG. 5 is a flowchart showing the prospective customer extraction process according to the present embodiment.
Fig. 6: The pattern distribution of each transaction data at the date and time of past investment trust purchases is shown.
Fig. 7: A figure explaining the association of pattern distribution of each transaction data is shown.
Fig. 8: A figure explaining the association of pattern distribution of each transaction data is shown.
Fig. 9: A figure explaining the association of the pattern distribution of the indicator based on each transaction data is shown. FIG. 10 An example of a sales destination priority list according to the present embodiment is shown.
FIG. 11 An example of a sales product priority list (variant example) according to this embodiment is shown.
FIG. 12: A figure explaining the association of pattern distribution of each transaction data is shown.

### Best Mode for Carrying Out the Invention

Embodiments of the present invention will be described in detail with reference to the drawings.

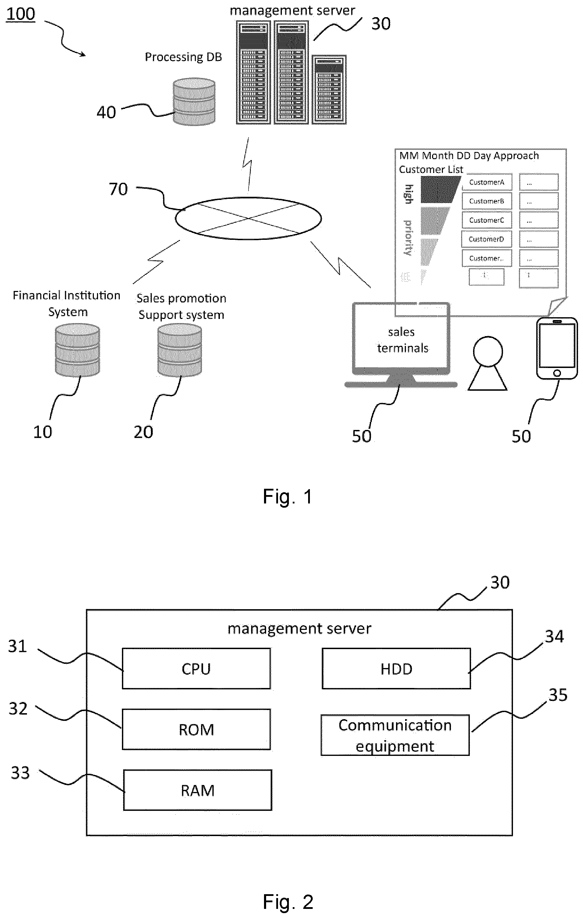

<System Configuration> FIG. 1 is a diagram showing a configuration example of a sales support system according to the present embodiment. The sales support system 100 of FIG. 1 includes a financial institution system 10, a sales promotion support system 20, a management server 30, a processing DB 40, and a sales terminal 50, and is connected via a network 70.

The financial institution system 10 has various systems and DB (databases) held by financial institutions such as banks. The financial institution system includes, for example, a core system for managing various deposits such as ordinary deposits and time deposits, a sales management system for managing sales results of financial products, a front compliance system for managing and proposing financial products according to the asset management needs of each customer, a history system (CRM) for managing negotiation history, and various DB associated with each system. Examples of financial products include investment trusts, free loans, card loans, personal car loans, and educational loans.

The sales promotion support system 20 is a system for supporting and supporting the sales activities of sales personnel at a financial institution. For example, the sales promotion support system 20 manages the customer destination of a salesperson and manages the sales progress status such as a daily sales report. In addition, on the system, it is possible to share information and exchange opinions between persons in charge, report information to the boss, and exchange instructions.

The management server 30 is a server department that extracts potential customers who are predicted to be likely to purchase financial products (for example, investment trust products) together with their priority (high order of purchase) based on the processing data of the processed DB 40. Further, the management server 30 creates (generates) a sales destination priority list used by sales representatives based on priority.

In addition, when the results of sales activities by sales representatives based on the sales priority list are feedback to the sales promotion support system 20, the management server 30 verifies the certainness of the forecast against the sales destination priority list (forecast list) and the feedback results and reflects it in the next sales destination priority list creation.

The processing DB 40 sequentially acquires raw data (called this because it's data before processing) from the DB of the financial institution system 10 being operated by the financial institution, and the processed data obtained by processing the acquired raw data is stored in a format which can be calculated by the management server 30. Since machine learning methods often cannot handle raw input data such as text and time series data, such unstructured data is converted into a vector by performing conversion processing. Although the format of raw data and processed data is different, the content and meaning of the data are the same.

The sales terminal 50 is, for example, a PC (personal computer), a smartphone, a tablet terminal, or the like, and is a user terminal used by a salesperson at a sales office or on the go. The salesperson accesses the management server 10 using the sales terminal 50, acquires and displays the sales destination priority list. As described above, the sales destination partner priority list is a list of potential customers who are expected to purchase a predetermined financial product (for example, an investment trust product) in order of priority. By approaching customers (targets) on the sales destination priority list in order of priority, the salesperson can carry out efficient sales activities even in a limited time. A predetermined application program, a web browser, or the like for acquiring and displaying the sales destination priority list from the management server 30 is pre-installed on the sales terminal 50.

The network 70 is a communication network including wired and wireless. The network 70 includes, for example, the Internet, a public switched telephone network, WiFi (registered trademark), and the like.

<Hardware configuration> FIG. 2 is a figure showing a hardware configuration example of a management server according to the present embodiment. As shown in FIG. 2, the management server 30 has a CENTRAL Processing Department (CPU) 31, a ROM (Read Only Memory) 32, a RAM (Random Access Memory) 33, an HDD (Hard Disk Drive) 34, and a communication department 35.

The CPU 31 executes various programs and performs arithmetic processing. The ROM 32 stores programs and the like required at startup. The RAM 33 is a work area for temporarily storing the processing in the CPU 11 and storing the data. The HDD 34 stores various data and programs. The communication department 35 communicates with another department via the network 70.

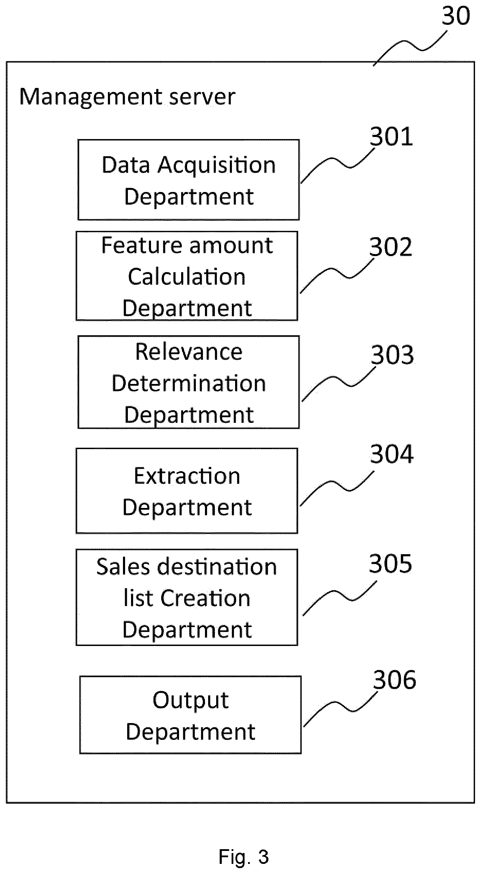

<Software Configuration> FIG. 3 is a diagram showing a software configuration example of the management server according to the present embodiment. The management server 30 has a data acquisition department 301, a feature amount calculation department 302, a relevance determination department 303, an extraction department 304, a sales destination partner list creation department 305, and an output department 306 as main functional departments.

The data acquisition department 301 acquires customer information and transaction data of customers in a financial institution from the processing DB 40 (or sales promotion support system 20) .

The feature amount calculation department 302 calculates the feature amount (for example, the feature vector) of the transaction data from the transaction data pattern of the customer.

The relevance determination department 303 determines whether or not there is an association between the transaction data of the customer at the time of purchase of the financial product in the past and the transaction data of the customer at present. For example, as a method for determining the relationship between transaction data, distance determination by feature vectorization can be used. Specifically, the distance between the feature vector calculated from the pattern of the customer's transaction data at the time the customer purchased the financial product and the feature vector calculated from the current (current time) pattern of the customer's transaction data (equivalent to the degree of relation) is calculated to determine whether or not the distance is close or not.

The extraction department 304 extracts the customer's transaction data at the time of purchase of the financial product in the past by the relevance determination department 303 and the customer who has been determined to be related to the transaction data of the customer at present with information indicating priority as a customer who becomes a sales destination.

The Sales destination list creation department 305 creates sales destination list information in which the customers extracted by the extraction department 304 are arranged in descending order of priority.

The output department 306 outputs the sales destination list information to the sales terminal 50.

Each functional department is realized by a computer program executed on hardware resources such as the CPU, ROM, and RAM of the computer constituting the management server 30. These functional parts may be read as "part", "module", "department", or "circuit". Further, each DB may be arranged in the HDD 34 of the management server 30 or an external storage department on the network 70. Further, each functional department of the management server 30 may be realized not only by a single server department but also as a system composed of a plurality of departments by distributing the functions.

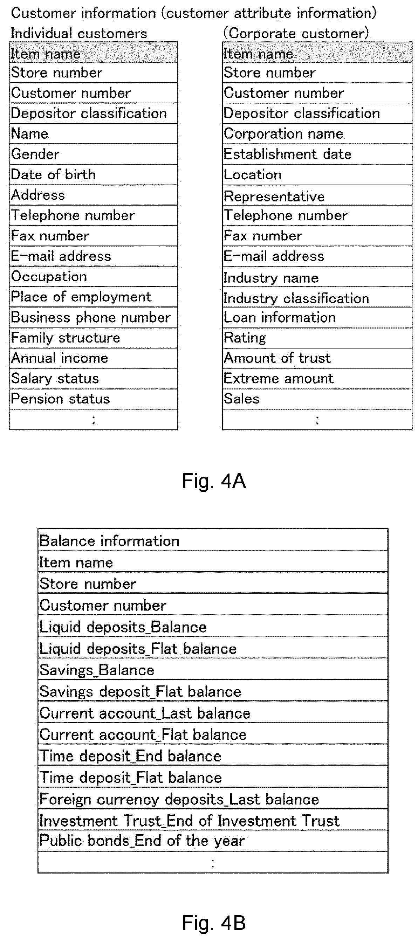

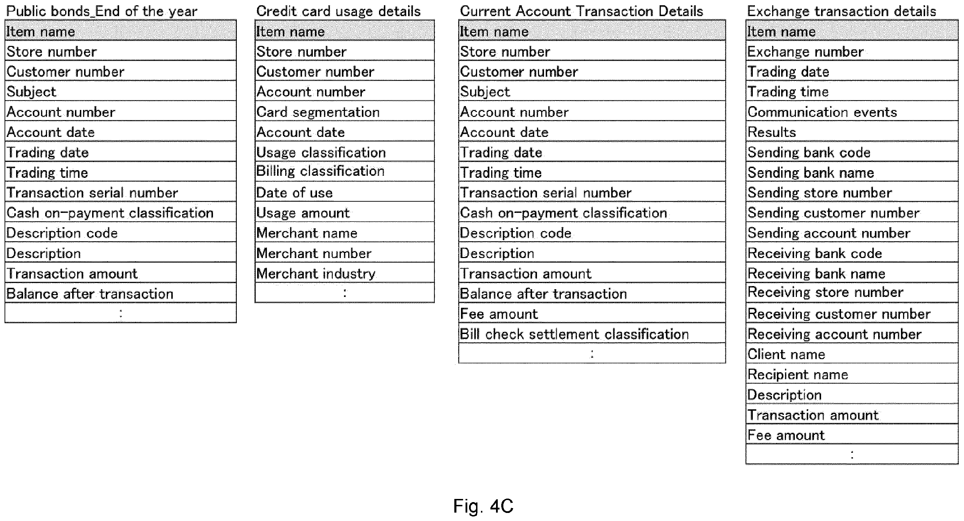

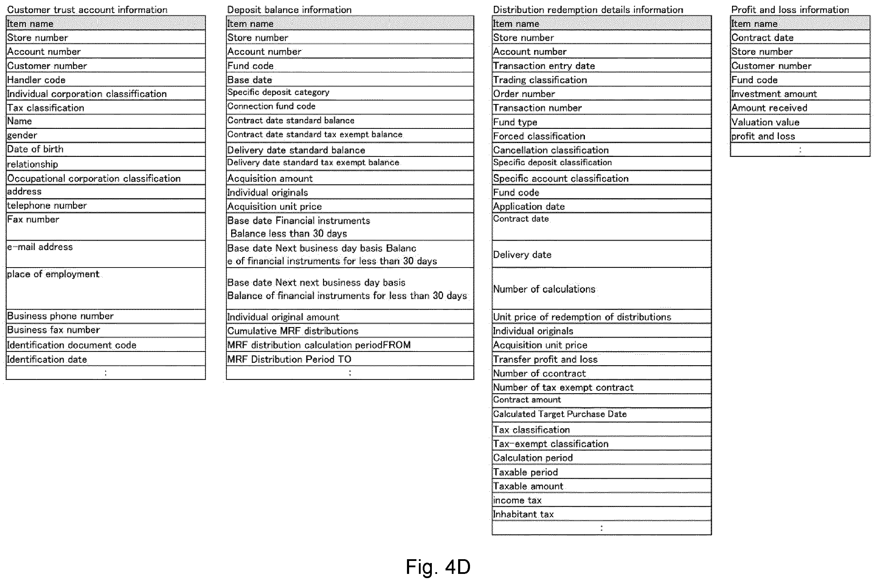

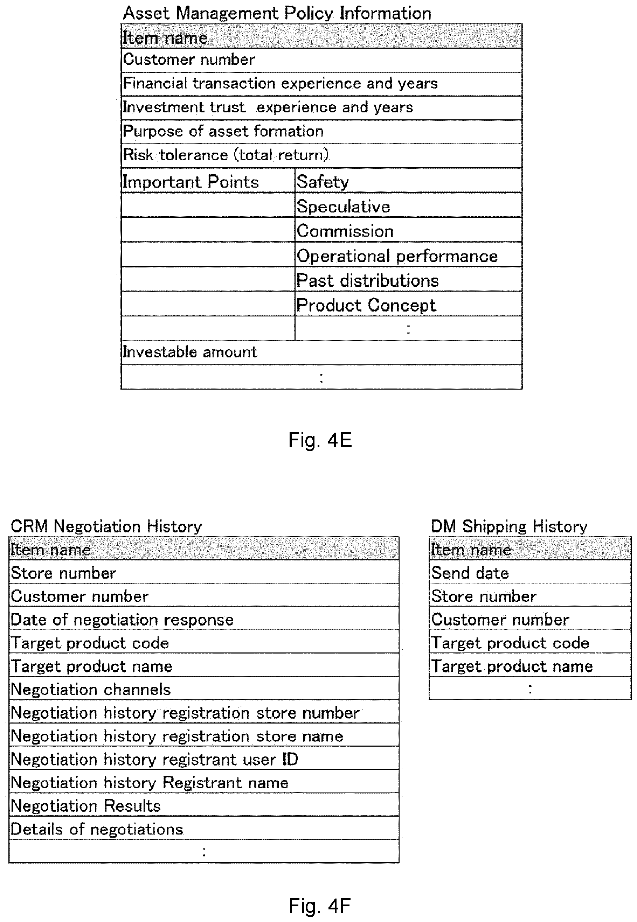

(Example of data item of DB of financial institution system) Next, an example of data item in DB (or processing DB 40) of financial institution system 10 will be shown. However, needless to say, the data items shown in FIG. 4 are merely examples, and other data items may be included.

FIG. 4A shows an example of customer information possessed by the financial institution system 10 (for example, a core system that manages various deposits such as ordinary deposits and time deposits). It is customer attribute information for each customer and is registered mainly based on an application from a customer when opening an account. Depending on the type of customer, there are individual customers and corporate customers.

FIG. 4B shows an example of balance information possessed by the financial institution system 10 (for example, a core system that manages various deposits such as ordinary deposits and time deposits). For example, it is balance information of each account held for each customer, such as a savings account, a checking account, a time deposit account, a foreign currency deposit account, and an investment trust account. Not to mention the current (latest) balance, all past balances are also recorded.

FIG. 4C shows an example of transaction detail information possessed by the financial institution system 10 (for example, a core system that manages various deposits such as ordinary deposits and time deposits). It is detailed information of each transaction generated for each customer, such as ordinary deposit transaction details, credit card usage details, checking deposit transaction details, and foreign exchange transaction details. All transactions from the past to the present are recorded.

FIG. 4D shows an example of investment trust information possessed by the financial institution system 10 (sales management system that manages the sales performance of financial products such as investment trusts). It is information related to investment trusts for each customer, such as customer investment trust account information, deposit balance information, distribution redemption details information, and profit / loss information.

FIG. 4E shows an example of asset management policy information possessed by the financial institution system 10 (a front compliance system for managing and proposing financial products according to the asset management needs of each customer). It is a policy / asset management needs for financial asset management for each customer and is registered mainly based on the application from the customer when opening an investment trust account. The salesperson makes proposals for financial products and asset management that match the policy needs in accordance with the policy.

FIG. 4F shows an example of negotiation history information possessed by the financial institution system 10 (history system for managing negotiation history). The history of negotiations, proposals, or DMs sent by salesperson or financial institution counter staff is recorded for each customer. As a result, the entire history of past negotiations between the customer and the financial institution can be viewed and managed.

Here, the customer information and the asset management policy information are relatively static and hard-to-change information. On the other hand, balance information, transaction details information, investment trust information, and negotiation history information are relatively dynamic and variable information and are "transaction data". In general, transaction data is one of the types of data handled by corporate information systems and the like and refers to data that records details of events that occur during sales operations.

The transaction data according to the present embodiment refers to data that records details of events that occur in connection with the use of financial services by customers, such as deposit balance information, transaction details information, and investment trust information, especially at financial institutions. Further, the transaction data according to the present embodiment is data in which the daily information changes (update frequency) are relatively large as compared with the information such as customer information in which the information does not change so frequently from the time of registration. However, if the update frequency is viewed for each customer, it depends on the frequency of use of the financial service of the customer, so the specific update frequency does not matter.

<Information processing> Next, various types of information processing executed by the management server 30 will be described in detail. (Data update processing) The management server 30 sequentially acquires raw data from the DB of the financial institution system 10 operated by the financial institution, and processes and converts the raw data acquired in a format that can be calculated by the management server 30. The processing data is updated to the processing DB 40. The update cycle can be arbitrarily set, for example, every second, every few seconds to several tens of seconds, every minute, every few minutes to several tens of minutes, every hour, every few hours, every day, every predetermined day, etc. Although it can be set, the shorter the update interval, the better, and it is desirable that the update interval is updated in real time together with the update of the raw data on the DB of the financial institution system 10. As a result, the processing DB 40 updates the data equivalent to the DB of the financial institution system 10 at each update interval, although the raw data and the processing data have different formats.

(Preprocessing) In the present embodiment, as an example of financial products, an example of extracting potential customers who are expected to purchase investment trust products will be described.

First, the management server 30 classifies target customers into groups according to whether or not they have purchased investment trusts in the past, based on customer transaction data (particularly investment trust information). The customers to be classified are existing customers of the financial institution and at least customers who have an account such as a savings deposit.
- Customer Group A: Customers who have purchased investment trusts in the past and who actually own investment trusts (targets for additional purchases of investment trusts), and customers who have purchased investment trusts in the past but are currently customers who do not own investment trusts (targets for repurchasing investment trusts)
- Customer group B: Only holding deposit accounts such as ordinary deposits, having no experience of purchasing investment trusts in the past, and currently purchasing investment trusts customers who do not own (targets for new purchases of investment trusts)

(Prospect customer extraction process for investment trusts) Next, a process for determining and extracting potential customers for investment trusts will be described. The extracted customer is listed as a sales destination partner in the sales destination partner priority list.

In the potential customer extraction process of an investment trust, for a customer classified as a customer group A who has purchased an investment trust in the past, a feature vector P indicating the feature amount of transaction data at the time of past purchase by the customer himself/herself and a feature vector N indicating the feature amount of the current transaction data in the customer himself/herself are calculated, based on the distance between the feature vector P and the feature vector N, the present prospect of purchase of the investment trust for the customer and the degree there is determined.

On the other hand, for customers classified as customer group B who have not purchased investment trusts in the past, a feature vector P' indicating the characteristic amount of transaction data at the time of past purchase of a customer classified as a customer group A and a feature vector N indicating the feature amount of transaction data at the present time in the customer himself/herself are calculated, based on the distance between the feature vector P' and the feature vector N, the present prospect of purchase of the investment trust for the customer and the degree there is determined. This will be described in detail below.

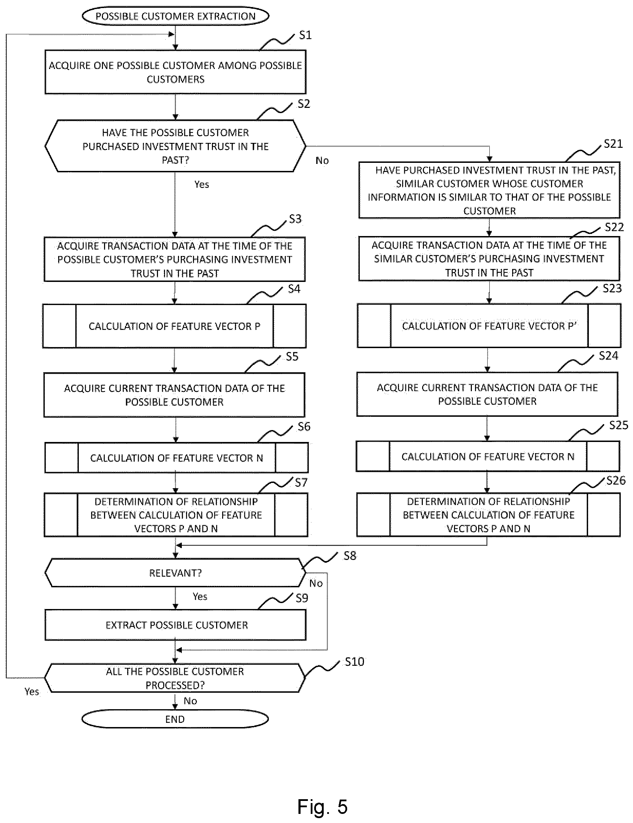

FIG. 5 is a flowchart showing a prospect extraction process according to the present embodiment. The operating subject is the management server 30.

S1: The management server 30 acquires one potential customer from the potential customers to be extracted. The potential customers are a given customer segment. The customer segments that are potential customers can be selected and set as follows. For example, all the customers of the financial institution (for example, the customers who have an account) may be acquired, such that all the customers of the branch (for example, the customers who have an account) may be acquired in the case of a sales branch, and all the customers in charge of the salesperson may be acquired in the case of salesperson. Alternatively, a customer who has no past purchase experience of an investment trust and holds an account (corresponding to the above-mentioned customer group B) and a customer who has a past purchase experience of an investment trust and holds an account (corresponding to the above-mentioned customer group A) may be acquired. Furthermore, it is possible to set a specific number of customers among all the customers of the financial institution. For each potential customer, it is determined whether or not the customer is a potential customer. Further, the potential customer may be arbitrarily determined by inputting detailed conditions (customer attribute information such as residence, age, occupation, income, etc.).

S2: The management server 30 determines whether or not the potential customer acquired in S1 has experience of purchasing an investment trust in the past. If the potential customer acquired in S1 has experience of purchasing an investment trust in the past, that is, if it is classified into customer group A, the process proceeds to S3. On the other hand, if the potential customer acquired in S1 has no experience of purchasing an investment trust in the past, that is, is classified into customer group B, the process proceeds to S21.

S3: The management server 30 acquires transaction data from the processing DB 40 at the time when the potential customer classified in the customer group A has purchased the investment trust in the past (or a predetermined period before the purchase corresponding to immediately before the purchase).

The transaction data to be acquired is not only one type of transaction data, but at least two or more types of transaction data at the time of purchase are acquired. Further, it is also possible to acquire all types of transaction data about which type of transaction data is acquired, but preferably the appropriate type of transaction data may be selectively acquired. Specifically, although the appropriate type of transaction data varies depending on the target financial product, it may be selected based on, for example, the transaction data history analysis of the customer who purchased the target financial product, and the results of the sales activity (i.e., whether the customer listed in the sales priority list ultimately purchased the investment trust), and the selection can be changed and modified.

In addition, when a plurality of investment trust purchase dates and times are specified, transaction data (transaction data values) at all purchase dates and times are acquired. Alternatively, when a plurality of investment trust purchase dates and times are specified, transaction data at any one date and time, such as the latest date and time, may be acquired.

S4: The management server 30 calculates the feature vector P from a pattern of a number of transaction data acquired by S3 (a combination of a number of transaction data (values). The calculated feature vector P shows the characteristic amount of the transaction data status of the potential customer at the time the potential customer purchased the investment trust in the past. When the date and time of a multiple mutual fund purchase is specified and transaction data at a specific purchase date and time is acquired, the feature vector P (P1, P2, P3...) at the date and time of each purchase can be calculated.

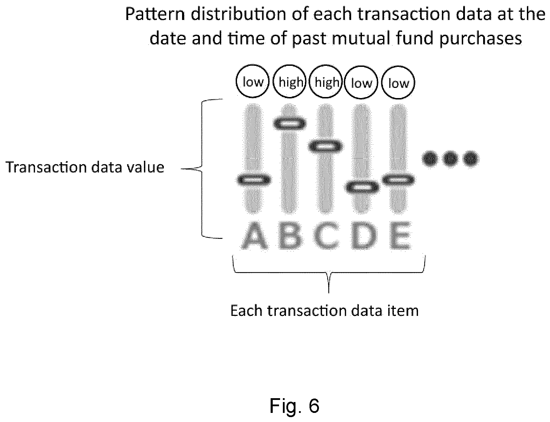

FIG. 6 shows the pattern distribution of each transaction data at the date and time of the past investment trust purchase. In the figure, A, B, C, D, and E are different types of transaction data items. The customer has a record of purchasing an investment trust in the past at the timing when each transaction data value has the pattern distribution shown in FIG. Therefore, the feature vector P is a numerical value of the situation in which the investment trust demand of the customer is expected to increase based on the pattern distribution (feature group) of the past transaction data possessed by the financial institution.

S5: The management server 30 acquires the current transaction data of the potential customer from the processing DB 40. The transaction data at the present time is the transaction data last updated on the processing DB 40. Further, the transaction data to be acquired is associated with the transaction data acquired in S3, and the same type of transaction data is acquired. This is to match the types of transaction data to be compared.

S6: The management server 30 calculates the feature vector N from the transaction data pattern (combination of transaction data (values)) acquired in S5. The calculated feature vector N indicates the feature amount of the transaction data status of the potential customer at the present time.

S7: The management server 30 executes the relevance determination process between the feature vector P and the feature vector N. For customers classified into customer group A who have purchased investment trusts in the past, the feature vector P of the transaction data at the time of the past purchase by the customer himself/herself and the feature vector N of the current transaction data by the customer himself/herself. The distance (corresponding to the degree of relevance) is calculated, and the presence or absence of relevance is determined based on the calculated distance.

Specifically, the management server 30 first calculates the distance between the feature vector P and the feature vector N. The distance of the feature vectors can be calculated by the conventional method, but the shorter the distance between the calculated feature vectors becomes, the higher (larger) the degree of association becomes, and the farther the distance becomes, the lower (smaller) the degree of association becomes.

Next, it is determined whether or not the distance between the calculated feature vectors is less than the reference value (determining whether or not it is closer than the reference value). When it is smaller than the reference value, since the distance between the feature vector P and the feature vector N is close, it is determined that the feature vector P is related to the feature vector N. The reference value is a value used as a reference for determining whether or not a feature vector is related in the related determination process, but it is not necessarily a fixed value, but can be a varied value relatively calculated.

Then, when the feature vector P and the feature vector N are related, the potential customer is determined to be expected to purchase an investment trust, and the distance between the feature vectors calculated earlier as each other is acquired. In this embodiment, the value of the distance between the feature vector P and the feature vector N is small (close), that is, the higher the association between the feature vector P and the feature vector N becomes, the higher the degree and expectation of the expected purchase of the investment trust becomes.

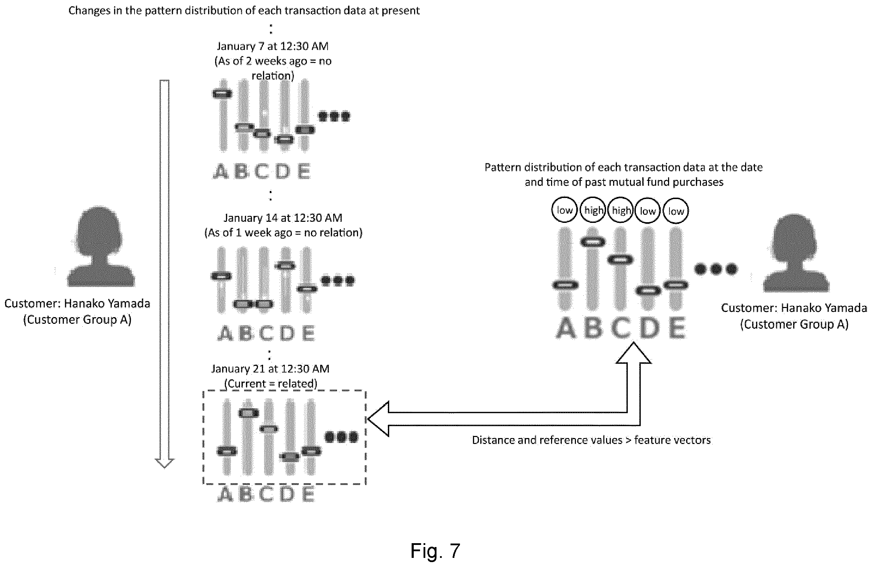

FIG. 7 shows a diagram illustrating the relationship between the pattern distributions of each transaction data. Even for the same customer (for example, Hanako Yamada), each transaction data changes day by day. Then, the transaction when the pattern distribution (corresponding to the feature vector N) of the daily transaction data of the customer (for example, Hanako Yamada) classified in the customer group A purchased the investment trust in the past of the customer (for example, Hanako Yamada). When it is related to the pattern distribution of the data (corresponding to the feature vector P), that is the timing when the customer (for example, Hanako Yamada) is likely to purchase the investment trust.

In the figure, for example, the pattern distribution of transaction data in Hanako Yamada, a customer on January 7, 2019 (as of two weeks ago) and January 14, 2019 (as of one week ago), is the past investment by Hanako Yamada. It is not related to the pattern distribution of each transaction data at the date and time of the trust purchase. On the other hand, as a result of each transaction data changing from moment to moment, as of January 21, 2019 (current time), the pattern distribution of transaction data at customer Hanako Yamada and each transaction at the date and time of past investment trust purchase at customer Hanako Yamada. It is related to the pattern distribution of the data. In other words, on January 21, 2019 (current time), it was shown that the pattern distribution of the current transaction data is in the same situation as when the customer Hanako Yamada herself actually purchased the investment trust in the past, and the investment trust again. It means that it is the right time to sell investment trust products to customer Hanako Yamada at the present time when there is a high possibility of purchasing.

Here, since each transaction data changes from moment to moment, if the transaction data changes significantly after this, the pattern distribution of transaction data in customer Hanako Yamada and the pattern distribution of each transaction data at the date and time of past investment trust purchases in customer Hanako Yamada are not related. In such a case, it can be said that customer Hanako Yamada is not already in a situation where there is a high possibility of purchasing investment trusts, and it is said that the appropriate timing to sell investment trust products to customer Hanako Yamada has been missed.

In addition, when the date and time of a multiple investment trust purchase are specified and transaction data at a multiple purchase date and time is acquired, a related determination process is executed between the feature vector P (P1, P2, P3 ...) at the date and time of each purchase and the feature vector N, and if the distance between one feature vector P and the feature vector N is smaller than the reference value, then it can be determined that they are relevant. Furthermore, when it is determined that it is related to a single feature vector P, it can be said that there is a higher possibility of purchasing an investment trust again, so that the higher the number of feature vector P determined to be related becomes, the greater the distance, that is to be acquired as the relevant degree, can be changed. Alternatively, the distance acquired as a relevance can be the maximum value of a number of distances acquired at the time of the related determination between the feature vector P (P1, P2, P3 ...) and the feature vector N, or it can be an average value of a number of acquired distances.

S8: As a result of the relevance determination process, if it is determined that the feature vector P and the feature vector N are related, the process proceeds to S9. If it is not determined to be related, the process proceeds to S10.

S9: The potential customer is extracted as a potential customer who is expected to have a high possibility of purchasing an investment trust at the present time. Also, the distance between the feature vectors calculated earlier as the degree of relevance is acquired.

S10: It is determined whether or not there is an unprocessed potential customer. If there is an unprocessed potential customer, the process proceeds to S1 again. When this process is executed for all potential customers, this process ends.

S21: On the other hand, if the potential customer in S2 has not purchased an investment trust in the past, the management server 30 determines the customer (similar customer) who has purchased the investment trust in the past (customer group A) who has similar or related customer information (customer attribute information) to the potential customer. For example, it can be said that customers with similar customer attributes such as age, gender, occupation, and annual income are likely to purchase investment trusts under similar transaction data pattern situations.

S22: The management server 30 acquires transaction data from the processing DB 40 at the time when a similar customer determined in S21 has purchased an investment trust in the past (or a predetermined period before the purchase corresponding to immediately before the purchase). The transaction data to be acquired is not limited to one type of transaction data, but at least two or more types of transaction data as of a specific date are acquired.

When a plurality of similar customers exists, a plurality of similar customers may be determined in S21, and all transaction data at the time when the plurality of similar customers purchased an investment trust in the past may be acquired in S22.

S23: The management server 30 calculates the feature vector P' from the transaction data pattern (combination of transaction data (values)) acquired in S22. The calculated feature vector P' indicates the feature amount of the transaction data status of the similar customer at the time when the similar customer purchased the investment trust in the past.

Further, when the transaction data at the time when the multiple similar clients purchased the investment trust in the past is acquired in S22, a further feature vector P ' (P '1, P '2, P '3 ...) may be calculated.

S24: The management server 30 acquires the current transaction data of the potential customer classified into the customer group B from the processing DB 40. The transaction data at the present time is the transaction data last updated on the processing DB 40. Further, the transaction data to be acquired is associated with the transaction data acquired in S22, and the same type of transaction data is acquired.

S25: The management server 30 calculates the feature vector N from the transaction data pattern (combination of transaction data (values)) acquired in S24. The calculated feature vector N indicates the feature amount of the transaction data status of the potential customer at the present time.

S26: The management server 30 executes a relevance determination process between the feature vector P ' and the feature vector N. for customers classified as customer group B who have not purchased investment trusts in the past, the distance between the characteristic vector P' of transaction data at the time of past purchase of the customer classified as customer group A and the feature vector N of the current transaction data in the customer himself/herself is calculated, and the calculated distance is less than the reference value, since the distance between the feature vector P' and the feature vector N is close, it is determined that the feature vector P' is related to the feature vector N.

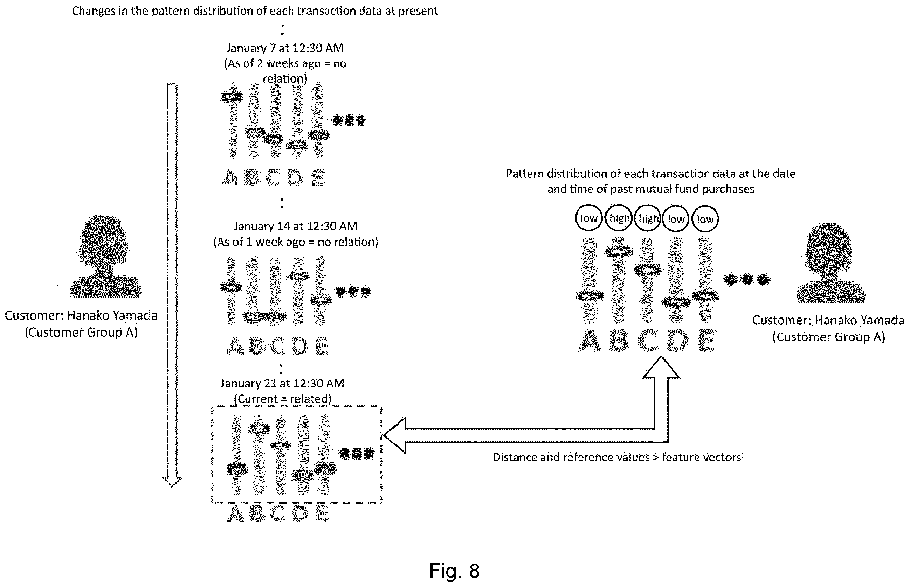

FIG. 8 shows a diagram explaining the relation of pattern distribution of each transaction data. Even if it is the same customer (for example., Ichiro Suzuki), each transaction data changes every day and time. When it is determined that the pattern distribution of daily transaction data of customers classified as customer group B (for example, Ichiro Suzuki) is related to the pattern distribution (corresponding to feature vector P') of transaction data when purchasing investment trusts in the past of customers (for example, Hanako Yamada) who belong to customer group A and have similar or relevant customer attributes, this is the time when the customer (for example, Ichiro Suzuki) is likely to purchase an investment trust.

In the figure, for example, on January 7, 2019 (as of January 14, 2019) and January 14, 2019 (as of one week ago), the pattern distribution of transaction data in customer Ichiro Suzuki, who has not purchased investment trusts in the past, is not related to the pattern distribution of each transaction data at the date and time of past investment trust purchases by customer Hanako Yamada, who has purchased investment trusts in the past. On the other hand, the pattern distribution of transaction data in customer Ichiro Suzuki on January 21, 2019 (present) and the pattern distribution of each transaction data at the date and time of past investment trust purchases by Hanako Yamada, a customer who has purchased investment trusts in the past, are related. In other words, on January 21, 2019 (present), the pattern distribution of current transaction data in customer Ichiro Suzuki showed that Hanako Yamada, a customer with similar or relevant customer attributes, was under the same situation as when she actually purchased the investment trust in the past, and in the present where the purchase of investment trusts is likely, it means that it is the right time to sell mutual fund products to customer Ichiro Suzuki.

If the feature vector P' and the feature vector N are related as a result of the relevance determination process (S8: YES), the potential customer is regarded as a potential customer who is expected to have a high possibility of purchasing an investment trust at the present time. It is extracted together with the distance between the feature vectors calculated earlier as the degree of relevance (S9). In addition, it determines whether there is an outstanding potential customer (S10), and if there is an outstanding potential customer, and proceed to S1 again. When this process is executed for all potential customers, this process ends.

Conventionally, the relationship between the target customer and the needs has been judged based on experience and knowledge or based only on one or more data values (for example, the amount of data values, or the match / mismatch with a predetermined value). In the present embodiment, the determination is made based on the mutual pattern (mutual combination) or relative pattern (relative combination) of various transaction data values.

For example, even if the situation in which one transaction data value (time deposit account balance, etc.) and the other transaction data value changed high (savings account balance, etc.) of multiple transaction data have changed in a low range, the customers may be more motivated to purchase mutual funds when both transaction data values have changed to a medium height value, even though the value cannot be said to be high. If you focus only on the large number of transaction data values, you will miss this increase in the willingness to purchase investment trusts.

That is, according to the present embodiment, it is possible to extract a target customer who is expected to have high needs even though it was difficult to extract with the conventional method. In addition, from transaction data that changes daily from the customer's own past and present, the timing of the ease of purchase of financial products is quantified and determined by calculation for each customer. For this reason, sales representatives can improve sales efficiency by proposing and selling financial products at the appropriate time specialized for individual customers.

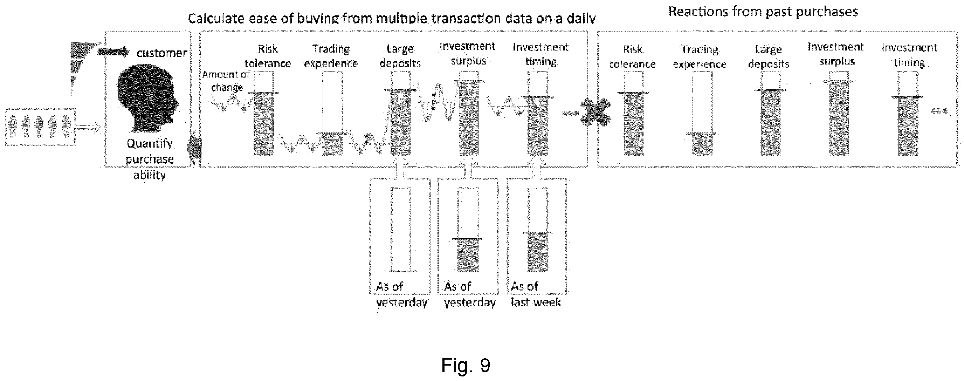

(Supplement 1) FIG. 9 shows a diagram explaining the association of the pattern distribution of the indicator based on each transaction data. The transaction data of A to E shown in FIGS. 7 and 8 may not necessarily correspond to each transaction data alone. For example, A to E are the following indicators. Each indicator is an indicator data that includes one or more transaction data, customer information, and / or asset management policy information. A: Indicator data based on "risk tolerance", investment trust information, asset management policy information, etc.

B: Indicator data based on "trading experience", transaction history, investment trust information, etc.

C: Indicator data based on "large deposits", savings balances, etc.

D: Indicator data based on "investment surplus", remaining ordinary deposits, liquid deposit balances, investment trust balances, etc. E: Indicator data based on "investment timing", customer information, deposits and deposits in ordinary deposits (salary, bonus payment date, etc.)

In the customer, each transaction data changes with the use of financial services for each individual customer, and the indicator data also changes. Then, when the pattern distribution of the customer's daily indicator data (corresponding to the feature vector N) is related to the pattern distribution of the indicator data (corresponding to the feature vector P, feature vector P') when the client has purchased the investment trust in the past, then that is the time when the customer is likely to purchase the investment trust.

As a result, from the perspective of extracting customers who are more likely to purchase, a more effective and realistic index is created based on the current transaction data, customer information, and / or asset management policy information, and it is possible to determine, based on the mutual pattern distribution of the indicator, the high or low probability of purchasing an investment trust for the customer.

(Supplement 2) In the case of a customer who has purchased an investment trust with a predetermined transaction data and, for example, when the savings account balance is 3 million yen in the past, if the current savings account balance is around 3 million yen, the current and past transaction data match, so these are determined to be related.

On the other hand, if the current savings account balance is around 5 million yen, it may be determined that the current and past transaction data are not related. However, a customer who has purchased an investment trust for the past 3 million yen is likely to purchase an investment trust for 5 million yen. In such a case, it can be considered that it is not related to the amount of the large deposit account balance but is related to the amount of the current deposit balance higher than the deposit balance at the time of the past purchase.

Specifically, if there is this kind of predetermined transaction data, the transaction data at the time of purchasing the investment trust in the past is acquired, and the transaction data at the present time is the transaction data at the time of purchasing the investment trust in the past. If it is greater than, the transaction data at the present time is corrected so as to match or approximate the value of the transaction data at the time of purchasing the investment trust in the past. Then, the feature vector can be calculated by including this kind of transaction data as one transaction data.

In addition, there is the opposite when this kind of predetermined transaction data is a desirable type as small as, for example, risk tolerance. That is, if the transaction data at the present time is less than the transaction data at the time of purchase of the investment trust in the past, the transaction data at the present point is corrected to match or approximate the value of the transaction data at the time of purchase of the investment trust in the past. On that, a feature vector can be calculated by including this kind of transaction data as one transaction data.

(Sales destination partner priority list creation process) When the management server 30 receives a request for acquisition or display of a sales destination priority list from the salesperson's sales terminal 50, the potential customer extracted by the potential customer extraction process (S9) is arranged in priority order (in order of high relevance acquired / order of close distance acquired) and create a sales destination priority list. Further, the management server responds to the created sales destination priority list based on the acquisition request from the sales terminal 50.

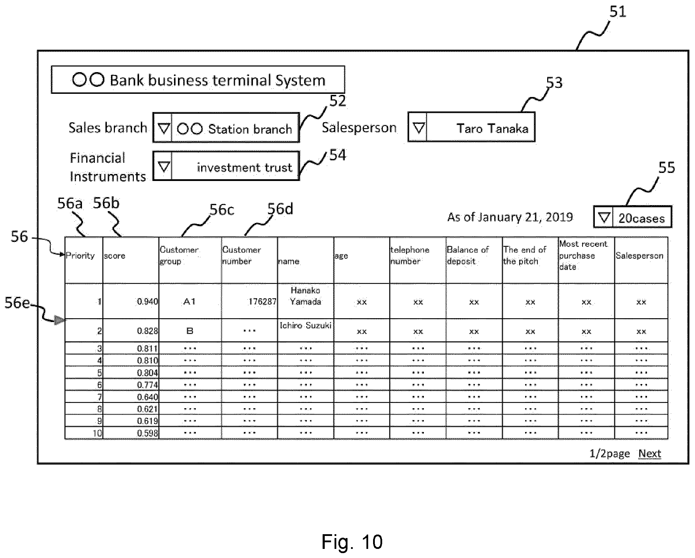

FIG. 10 shows an example of a sales destination partner priority list according to the present embodiment. The salesperson acquires and displays the sales destination priority list screen from the management server 10 on the sales terminal 50. The sales destination partner priority list 51 has, for example, a sales branch selection field 52, a salesperson selection field 53, a financial product selection field 54, a customer number designation field 55, and a list 56.

The sales branch selection field 52 is a field for selecting a sales branch. Customer who has an account at the selected sales branch becomes a target potential customer of the sales destination priority list 51.

The salesperson selection field 53 is a field for selecting a salesperson. The customer in charge of the selected salesperson becomes the target potential customer of the sales destination priority list 51.

The financial product selection field 54 is a field for selecting the type of financial product that is the key to the list search. The customers who are likely to purchase the selected financial product are potential customers for the sales destination partner priority list 51.

The customer number designation field 55 is a field for designating and selecting the number of customers (number of cases) to be displayed in the list 56. The number of customers specified by the customers with the highest priority and score is displayed in the list 56. For example, the salesperson specifies the number of customers that the salesperson can approach on that day.

List 56 is a list of customers who have an account at the selected sales branch and are in charge of the selected salesperson, and who are selected financial products, and who are extracted by the potential customer extraction process, are arranged in order of priority. Further, List 56 includes items such as priority 56a, score 56b, customer group 56c, and customer information 56d.

Priority 56a indicates a priority order to be operated. The higher the degree of relevance acquired in S9 (the closer the acquired distance), the higher the probability of purchasing an investment trust. Therefore, the priority 56a corresponds to the acquired relevance (distance). That is, on the list 56, the customers are arranged in the order of high relevance (closest distance) acquired together with the customers extracted by the potential customer extraction process. Since the purchase prospect is high for financial product with a higher priority of 56a, the salesperson can efficiently sell by approaching customers in order from the highest priority 56a.

The score 56b is a value of the degree of relevance (distance) itself or a correction value thereof. The salesperson can grasp the degree of purchase prospect for each customer by a concrete numerical value.

The customer group 56c indicates whether the customer has purchased financial products 54. For example, in accordance with the above mentioned, customers who have purchased investment trusts in the past and actually still hold mutual funds (targets for additional investment trust purchasers) are A1, and customers who have purchased investment trusts in the past but do not currently hold mutual funds (targets for re-purchasers of investment trusts) are A2. Customers who have not purchased investment trusts in the past and do not currently hold mutual funds (targets for new investment trusts) are B. It is a reference information at the time of proposal and sales of financial products for the sales representative.

The customer information 56d is customer information including the customer number, name, age, and the like of the customer. The salesperson approaches the customer while referring to the customer information 56d on the list 56.

In addition, when creating a sales destination priority list processing, it is also possible to exclude customers who are already in sales or already in sales from the sales destination priority list 51 (Listing 56) based on the past negotiation history of the sales promotion support system 20. This is to avoid duplicate sales.

Also, in List 56, if the opening of the score with the customer score 56b and the score of the next priority customer 56b is large (for example, the score is 0.1 or more), the display 56e that classifies the customers, and the next customer is shown, for example, by arrows, lines and colors. For example, in the case of the display 56e in FIG. 10, the salesperson has a large opening of the score with priority 6 and priority 7, so that when business hours are particularly limited, approaching only customers with priority 1 to 6 according to the display 56e, for example, it is possible to optimize the time-to-effect than when approaching customers with priority 1 to 7. In this case, the meaning is that customers with priority 1 to 10 in Listing 56 are further grouped into groups that are to be prioritized in terms of sales, such as first priority groups 1 to 6 and second priority groups 7 to 10 according to the display 56e.

As described above, according to the sales destination partner priority list 51, it is possible to list the customers who are appropriate to approach at the present time when the sales destination partner priority list 51 is created. The salesperson can improve the sales efficiency by proposing and selling financial products based on the sales destination priority list 51.

<Variation example> Next, the sales product priority list will be described. The list of sales destinations in FIG. 10 is a list of customers who are highly likely to purchase the financial products with financial products (for example, investment trusts) as the key. The sales product priority list pertaining to this variant is a list of financial products (types of financial products) that are highly likely to be purchased for the customer among multiple types of financial products, with the customer (for example, Hanako Yamada) as the key.

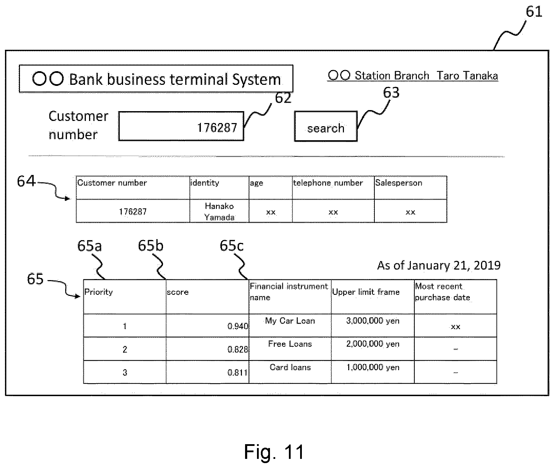

FIG. 11 shows an example of a sales product priority list (modification example) according to the present embodiment. The sales product priority list 61 has, for example, a customer number input field 62, a search button 63, customer information 64, and a list 65.

For example, suppose a customer (for example, Hanako Yamada) visits a customer counter and proposes a recommended financial product to the customer. The salesperson inputs the customer number of the customer in the input field 62 on the sales terminal 50 and presses the search button 63 to display the customer information 64 and the list 65 of the customer.

List 65 is a sales product priority list in which each financial product that is considered to be highly likely to be purchased with respect to the selected customer is arranged in order of priority.

Priority 65a indicates a priority order to be operated. According to the priority 65a, the customers are arranged in descending order of relevance (closest distance) acquired together with each financial product. Since the purchase prospect is high for the financial product with a higher priority of 65a, salesperson can make efficient product proposals by approaching customers in order from the highest of priority 65a.

The score 65b is a value of the degree of relevance (distance) itself or a correction value thereof. The salesperson can grasp the degree of purchase prospect for each financial product by a concrete numerical value.

The financial product name 65c indicates a specific type and name of a financial product that should be proposed (recommended) to the customer. In addition, related information according to specific financial products such as "upper limit" and "latest purchase date" can be displayed. The salesperson makes a product proposal to the customer while referring to the financial product name 65c on the list 65.

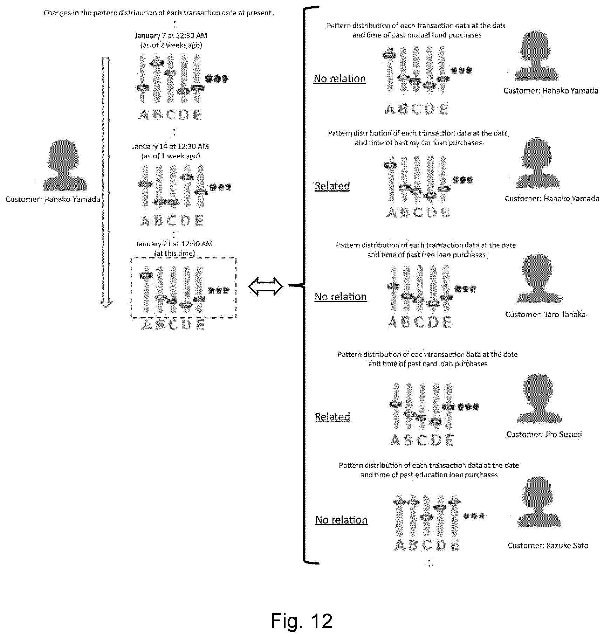

FIG. 12 shows a diagram illustrating the relationship between the pattern distributions of each transaction data. As mentioned above, each transaction data changes day by day even for the same customer. Then, if the pattern distribution of the daily transaction data of the customer (for example, Hanako Yamada) is relevant to the pattern distribution of the transaction data when the customer purchased each type of financial product (for example, an investment trust or a car loan) in the past, it is the time when the customer (for example, Hanako Yamada) is likely to purchase that type of financial product.

In addition, for financial products that the customer (for example, Hanako Yamada) has never purchased in the past (for example, free loans, card loans, educational loans), similar customers are determined, who have purchased the financial products in the past and have customer attributes that are similar or relevant to the customer (for example, Hanako Yamada), and the association with the pattern distribution of transaction data of the determined similar customers at the time of previous purchase of each type of financial product (for example, free loans, card loans and educational loans) is determined.

Specifically, with about investment trusts, on January 21, 2019 (currently) when a customer (for example, Hanako Yamada) visited the customer window, the pattern distribution of transaction data in customer Hanako Yamada and the pattern distribution of each transaction data at the date and time of past investment trust purchases by customer Hanako Yamada are not related.

Next, regarding private car loans, as of January 21, 2019 (current time), the pattern distribution of transaction data at customer Hanako Yamada and the pattern distribution of each transaction data at the date and time of past purchase of private car loans at customer Hanako Yamada are related.

Next, with about free loans, the customer (for example, Hanako Yamada) has never purchased a free loan in the past, so it determines a similar customer (for example, Taro Tanaka) who has purchased a free loan in the past and is similar or related to the customer (for example, Hanako Yamada) or has a customer attribute. As of January 21, 2019 (present), the pattern distribution of transaction data in customer Hanako Yamada is related to the pattern distribution of each transaction data at the date and time of past free loan purchases by customer Taro Tanaka.

Next, regarding the card loan, since the customer (for example, Hanako Yamada) has never purchased the card loan in the past, she has purchased the card loan in the past and has similarities or relevance to the customer (for example, Hanako Yamada). Determine a similar customer (for example, Jiro Suzuki) who has the customer attribute. As of January 21, 2019 (current time), the pattern distribution of transaction data at customer Hanako Yamada and the pattern distribution of each transaction data at the date and time of past card loan purchases at customer Jiro Suzuki are related.

Next, with about education loans, the customer (for example, Hanako Yamada) has never purchased an education loan in the past, so it determines a similar customer (for example, Kazuko Sato) who has purchased an education loan in the past and has similar or related customer attribute to the customer (for example, Hanako Yamada) or has a customer attribute. As of January 21, 2019 (present), the pattern distribution of transaction data in customer Hanako Yamada is not related to the pattern distribution of each transaction data at the date and time of past education loan purchases by customer Kazuko Sato.

As described above, the relevance determination portion 303 of the management server 30 according to this variant determines the relationship between the pattern distribution of transaction data in the customer and the pattern distribution of each transaction data at the date and time of the past purchase of the financial product for each type of financial product.

Next, the extraction department 304 extracts the type of the financial product to which the pattern distribution of the customer's transaction data is related by the relevance determination department 303 as a financial product to be operated, together with the degree of relevance indicating the priority. Specifically, among financial products, private car loans, free loans, and card loans are extracted as financial products to be operated together with the degree of relevance indicating the degree of relevance such as the distance between the above-mentioned feature vectors. Then, the sales destination list creation department 305 creates sales product list information in which each type of financial product extracted by the extraction department 304 is arranged in descending order of priority (corresponding to the degree of relevance) (FIG. 11).

For example, it is possible to refer to an example of investment trust information in FIG. 4D whether or not he/she has purchased an investment trust in the past; however, with respect to free loans, card loans, private car loans, and educational loans, for example, it is also possible to determine whether or not he/she has purchased an investment trust in the past, by referring to the non-illustrated financial institution system 10 (sales management system that manages sales results of various financial products).

In addition, it is also possible to make a list (investment trust product priority list), with the investment trust as the key, a list of specific investment trust product names that are likely to be purchased by the customer, such as investment trust product A, investment trust product B, etc., with their priorities. In this case, for each investment trust product, it is possible to determine the relationship between the pattern distribution of transaction data in the customer and the pattern distribution of each transaction data at the date and time of the purchase of the investment trust product in the past.

<Summary> As described above, according to the sales support system 100 related to the present embodiment, it is possible to accurately extract customers who are expected to have needs for a predetermined financial product and support efficient sales activities at a financial institution.

According to the suitable embodiment of the present invention, the present invention is described by showing specific examples, but it is clear that various modifications and modifications can be made to these specific examples without deviating from the broad spirit and scope of the present invention defined in the scope of the claim. That is, the present invention shall not be interpreted as limited by the details of specific examples and the attached drawings.

The management server 30 can be referred to as a sales support apparatus, a potential customer extraction department, a sales destination list creation apparatus, or the like by considering to the functional aspect of the server.

### Description of Reference Symbols

10 Financial institution system
20 Sales promotion support system
30 Management server
40 Processing DB
50 Sales terminal
70 Network
100 Sales support system
301 Data acquisition department
302 Feature amount calculation department
303 Relevance determination department
304 Extraction department
305 Sales destination list creation department
306 Output department

## Claims

1. A sales support apparatus in a financial institution, **characterized in that** the sales support apparatus include:
an acquisition part configured to acquire transaction data of a customer in the financial institution;
a relevance determination part configured to determine a relationship between first transaction data of the customer at the time of purchasing a financial product in the past and second transaction data of the corresponding customer at the present time;
an extraction part configured to extract the customer whose first transaction data and second transaction data are determined by the relevance determination part to be relevant; and
an output part configured to the customer extracted by the extraction part.

2. A sales support apparatus in a financial institution, **characterized in that** the sales support apparatus include:
an acquisition configured to acquire at least two different types of transaction data of a customer in the financial institution;
a relevance determination part configured to determine a relationship between a pattern of first transaction data of the customer at the time of purchasing a financial product in the past and a pattern of second transaction data of the corresponding customer at the present time;
an extraction part configured to extract the customer whose pattern of the first transaction data and pattern of the second transaction data are determined by the relevance determination part to be relevant; and
an output part configured to the customer extracted by the extraction part.

3. The sales support apparatus according to claim 1 or 2, **characterized in that**, when a plurality of customers are extracted by the extraction part, the output part outputs the customers in the order of increasing degree of relevance determined by the relevance determination part.

4. The sales support apparatus according to claim 1 or 2, **characterized in that**, when a plurality of customers are extracted by the extraction part, the output part outputs the customers in a list in which the customers are listed in the order of increasing degree of relevance determined by the relevance determination part.

5. The sales support apparatus according to claim 3 or 4, **characterized in that**, when the output part outputs the customers in the order of the increasing degree of relevance, the output part outputs a classification between a first customer having the highest degree of relevance and a second customer having the second highest degree of relevance in the case where a difference in the degree of relevance between the first customer and the second customer is greater than a predetermined value.

6. The sales support apparatus according to claim 1 or 2, **characterized in that**, with respect to a predetermined transaction data among the transaction data of the customer, the relevance determination part equates or approximates the second transaction data to the first transaction data, when the second transaction data is greater than the first transaction data.

7. The sales support apparatus according to claim 1 or 2, **characterized in that**, with respect to a predetermined transaction data among the transaction data of the customer, the relevance determination part equates or approximates the second transaction data to the first transaction data, when the second transaction data is smaller than the first transaction data.

8. The sales support apparatus according to claim 1, **characterized in that**, when there are a plurality of time points for purchasing financial products in the past,
the relevance determination part determines the relationship between each of the plurality of first transaction data of the past time points and the second transaction data, and
the extraction part extracts the customer whose first transaction data of at least one time point in the past and second transaction data are determined to be relevant by the relevance determination part.

9. The sales support apparatus according to claim 2, **characterized in that**, when there are a plurality of time points for purchasing financial products in the past,
the relevance determination part determines the relationship between each pattern of the plurality of first transaction data of the past time points and a pattern of the second transaction data, and
the extraction part extracts the customer whose pattern of the first transaction data of at least one time point in the past and second transaction data are determined to be relevant by the relevance determination part.

10. The sales support apparatus according to any one of claims 1 to 9, **characterized in that** the financial product is an investment trust product.

11. The sales support apparatus according to any one of claims 1 to 10, **characterized in that** the output part is a display configured to display the customer extracted by the extraction part on a sales terminal in a financial institution.

12. A sales support apparatus in a financial institution, **characterized in that** the sales support apparatus include:
an acquisition part configured to acquire transaction data of customers in the financial institution;
a relevance determination part configured to determine a relationship between first transaction data of a first customer at the time of purchasing a financial product in the past and second transaction data of a second customer, who does not purchase the financial product, at the present time;
an extraction part configured to extract the second customer for which the first transaction data and the second transaction data are determined by the relevance determination part to be relevant; and
an output part configured to the second customer extracted by the extraction part.

13. A sales support apparatus in a financial institution, **characterized in that** the sales support apparatus include:
an acquisition configured to acquire at least two different types of transaction data of customers in the financial institution;
a relevance determination part configured to determine a relationship between a pattern of first transaction data of a first customer at the time of purchasing a financial product in the past and a pattern of second transaction data of a second customer, who does not purchase the financial product, at the present time;
an extraction part configured to extract the second customer for which the first transaction data and the second transaction data are determined by the relevance determination part to be relevant; and
an output part configured to the second customer extracted by the extraction part.

14. The sales support apparatus according to claim 12 or 13, **characterized in that** the first customer is a customer whose customer information is related to customer information of the second customer.

15. The sales support apparatus according to any one of claims 12 to 14, **characterized in that** the financial product is an investment trust product.

16. The sales support according to any one of claims 12 to 15, **characterized in that** the output part is a display configured to display the second customer extracted by the extraction part on a sales terminal in a financial institution.

17. A sales support apparatus in a financial institution, **characterized in that** the sales support apparatus include:
an acquisition part configured to acquire transaction data of a customer in the financial institution;
a relevance determination part configured to determine, on a financial product type basis, a relationship between first transaction data of a customer at the time of purchasing a financial product in the past and second transaction data of the corresponding customer at the present time;
an extraction part configured to extract a type of the financial product for which the first transaction data and the second transaction data are determined by the relevance determination part to be relevant; and
an output part configured to the type of the financial product extracted by the extraction part.

18. A sales support apparatus in a financial institution, **characterized in that** the sales support apparatus include:
an acquisition part configured to acquire at least two different types of transaction data of a customer in the financial institution;
a relevance determination part configured to determine, on a financial product type basis, a relationship between a pattern of first transaction data of a customer at the time of purchasing a financial product in the past and a pattern of second transaction data of the corresponding customer at the present time;
an extraction part configured to extract a type of the financial product for which the pattern of the first transaction data and the pattern of the second transaction data are determined by the relevance determination part to be relevant; and
an output part configured to the type of the financial product extracted by the extraction part.

19. A sales support apparatus in a financial institution, **characterized in that** the sales support apparatus include:
an acquisition part configured to acquire transaction data of a second customer in the financial institution;
a relevance determination part configured to determine, on a financial product type basis, a relationship between first transaction data of a first customer at the time of purchasing a financial product in the past and second transaction data of the second customer, who does not purchase the financial product, at the present time;
an extraction part configured to extract a type of the financial product for which the first transaction data and the second transaction data are determined by the relevance determination part to be relevant; and
an output part configured to the type of the financial product extracted by the extraction part.

20. A sales support apparatus in a financial institution, **characterized in that** the sales support apparatus include:
an acquisition part configured to acquire at least two different types of transaction data of a second customer in the financial institution;
a relevance determination part configured to determine, on a financial product type basis, a relationship between a pattern of first transaction data of a first customer at the time of purchasing a financial product in the past and a pattern of second transaction data of the second customer, who does not purchase the financial product, at the present time;
an extraction part configured to extract a type of the financial product for which the pattern of the first transaction data and the pattern of the second transaction data are determined by the relevance determination part to be relevant; and
an output part configured to the type of the financial product extracted by the extraction part.

21. The sales support according to any one of claims 17 to 20, **characterized in that** the output part is a display configured to display the type of the financial product extracted by the extraction part on a sales terminal in a financial institution.

22. A sales destination list creation apparatus in a financial institution, **characterized in that** the sales destination list creation apparatus include:
an acquisition part configured to acquire customer information of customers in a financial institution;
an extraction part configured to extract a plurality of customers who are sales destinations among the customers together with information indicating priority;
a creation part configured to create sales destination list information in which the plurality of customers are arranged in the order of higher priority; and
an output part configured to output the sales destination list information to a sales terminal,
wherein the plurality of customers are customers whose transaction data at the time of purchasing a financial product in the past and transaction data at the present time are relevant.

23. A sales destination list creation apparatus in a financial institution, **characterized in that** the sales destination list creation apparatus include:
an acquisition part configured to acquire customer information of customers in a financial institution;
an extraction part configured to extract a plurality of customers who are sales destinations among the customers together with information indicating priority;
a creation part configured to create sales destination list information in which the plurality of customers are arranged in the order of higher priority; and
an output part configured to output the sales destination list information to a sales terminal,
wherein the plurality of customers are customers whose pattern of transaction data at the time of purchasing a financial product in the past and pattern of transaction data at the present time are relevant.

24. The sales destination list creation apparatus according to claim 22 or 23, **characterized in that** the priority is the degree of relevance.
